# EUROPÄISCHE PATENTSCHRIFT

(11) **EP 0 854 170 B1**
(45) Veröffentlichungstag und Bekanntmachung des Hinweises auf die Patenterteilung: **10.12.2003**
(21) Anmeldenummer: 98100049.0
(22) Anmeldetag: 03.01.1998
(51) Int. Cl.: C08L 21/00

(54) **SBR-Kautschukgele enthaltende Kautschukmischungen**
Rubber compositions containing SBR-rubber gels
Compositions de caoutchouc contenant des gels à base de caoutchouc-SBR

(30) Priorität: 17.01.1997 DE 19701488
(43) Veröffentlichungstag der Anmeldung: 22.07.1998
(73) Patentinhaber: BAYER AG, 51368 Leverkusen (DE)
(72) Erfinder: Obrecht, Werner, Dr., 47447 Moers (DE); Scholl, Thomas, Dr., 51469 Bergisch Gladbach (DE); Eisele, Ulrich, Dr., 51375 Leverkusen (DE); Jeske, Winfried, 51399 Burscheid (DE); Wendling, Peter, 51375 Leverkussen (DE); Schmidt, Adolf, Dr., 51061 Köhl (DE)

(56) Entgegenhaltungen:
- EP-A- 0 450 983
- DE-A- 4 220 563
- GB-A- 1 078 400

## Beschreibung

Die Erfindung betrifft Mischungen aus C=C-Doppelbindungen enthaltenden Kautschuken und Styrol/Butadien-Kautschukgelen (SBR-Gelen) sowie daraus hergestellte Vulkanisate. Die Vulkanisate zeigen eine ungewöhnlich hohe Dämpfung bei Temperaturen von -20 bis +20°C sowie eine ungewöhnlich niedrige Dämpfung bei Temperaturen von 40 bis 80°C und eignen sich daher besonders gut für die Herstellung naßrutschfester und rollwiderstandsarmer Kfz-Reifenlaufflächen.

Zur Reduktion des Rollwiderstands von Reifen sind in der Literatur eine Vielzahl von Maßnahmen beschrieben worden u.a. auch die Verwendung von Polychloroprengelen (EP-A 405 216) und Polybutadiengelen (DE-A 42 20 563) in Reifenlaufflächen aus C=C-Doppelbindungen enthaltenen Kautschuken. Nachteile bei der Verwendung von Polychloropren-Gel ergeben sich aus dem hohen Kautschukpreis, der hohen Dichte des Polychloroprens und den beim Recyclingprozeß von Altreifen zu erwartenden ökologischen Nachteilen wegen der chlorhaltigen Komponente. Polybutadiengele gemäß DE-A 42 20 563 zeigen diese Nachteile nicht, jedoch wird hier die dynamische Dämpfung sowohl bei tiefen Temperaturen (-20 bis +20°C) als auch bei höheren Temperaturen (40-80°C) gesenkt, was in der Praxis neben Rollwiderstandsvorteilen zu Nachteilen im Naßrutschverhalten der Reifen führt. Schwefelvernetzte Kautschukgele gemäß GB-PS 1 078 400 zeigen keine verstärkende Wirkung und sind daher für die vorliegende Anwendung ungeeignet.

Es wurde jetzt -überraschend gefunden, daß mit speziellen SBR-Gelen gefüllte C=C-doppelbindungshaltige Kautschukvulkanisate eine hohe dynamische Dämpfung bei niedriger Temperatur und eine geringe dynamische Dämpfung bei höherer Temperatur besitzen, so daß sich sowohl Vorteile im Rollwiderstand als auch im Naßrutschverhalten ergeben. Besonders gute Eigenschaften ergeben sich durch die Verwendung von SBR-Gelen in Kautschukmischungen, die Polybutadienkautschuk enthalten.

Gegenstand der Erfindung sind daher Mischungen aus mindestens einem Styrol/Butadien-Kautschukgel (A) und mindestens einem doppelbindungshaltigen Kautschuk (B), wobei der Anteil an Styrol/Butadien-Kautschukgel 1 bis 100 Gew.-Teile, vorzugsweise 5 bis 75 Gew.-Teile, bezogen auf 100 Gew.-Teile C=C-doppelbindungshaltigem Kautschuk beträgt, sowie gegebenenfalls weiteren Füllstoffen und Kautschukhilfsmitteln.

Unter Styrol/Butadien-Kautschukgelen (A) werden Mikrogele verstanden, hergestellt durch Vernetzung von
- SBR-: Styrol/Butadien-Copolymerisaten mit Styrolgehalten von 1 bis 80 Gew.-%, vorzugsweise 5 bis 50 Gew.-%, und/oder
- XSBR -: Styrol/Butadien-Copolymerisaten und Pfropfpolymerisaten mit weiteren polaren ungesättigten Monomeren, wie Acrylsäure, Methacrylsäure, Acrylamid, Methacrylamid, N-Methoximethyl-methacrylsäureamid, N-Acetoxymethyl-methacrylsäureamid, Acrylnitril, Dimethylacrylamid, Hydroxyethylacrylat, Hydroxyethylmethacrylat mit Styrolgehalten von 1 bis 75 Gew.-% und Gehalten an einpolymerisierten polaren Monomeren von 1 bis 20 Gew.-%.

Die Styrol/Butadien-Kautschukgele besitzen Teilchendurchmesser von 5 bis 1000 , bevorzugt 20-400 nm (DVN-Wert nach DIN 53 206) und Quellungsindizes (Qᵢ) in Toluol von 1 bis 15, vorzugsweise 1 bis 10. Der Quellungsindex wird aus dem Gewicht des lösungsmittelhaltigen Gels (nach Zentrifugation mit 20.000 Upm) und dem Gewicht des trockenen Gels berechnet:
- Qᵢ: Naßgewicht des Gels/Trockengewicht des Gels.

Zur Ermittlung des Quellungsindex läßt man z.B. 250 mg SBR-Gel in 25 ml Toluol 24 Stunden unter Schütteln quellen. Das Gel wird abzentrifugiert und gewogen und anschließend bei 70°C bis zur Gewichtskonstanz getrocknet und nochmals gewogen.

Die Herstellung der Styrol/Butadien-Kautschuk-Ausgangsprodukte erfolgt bevorzugt durch Emulsionspolymerisation. Siehe hierzu z.B. I. Franta, Elastomers and Rubber Compounding Materials, Elesevier, Amsterdam 1989, Seite 88 bis 92.

Die Vernetzung der Kautschuk-Ausgangsprodukte zu Styrol/Butadien-Kautschukgelen erfolgt im Latexzustand und kann einerseits während der Polymerisation durch Fortführung der Polymerisation bis zu hohen Umsätzen oder im Monomerzulaufverfahren durch Polymerisation bei hohen internen Umsätzen erfolgen oder im Anschluß an die Polymerisation durch Nachvemetzung oder auch durch die Kombination beider Prozesse durchgeführt werden. Auch die Herstellung durch Polymerisation in Abwesenheit von Reglern ist möglich.

Die Vernetzung des Styrol/Butadien-Kautschuks kann auch durch Copolymerisation mit vernetzend wirkenden multifunktionellen Verbindungen erreicht werden. Bevorzugte multifunktionelle Comonomere sind Verbindungen mit mindestens zwei, vorzugsweise 2 bis 4, copolymerisierbaren C=C-Doppelbindungen, wie Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleinimid und/oder Triallyltrimellitat. Darüber hinaus kommen in Betracht: die Acrylate und Methacrylate von mehrwertigen, vorzugsweise 2 bis 4-wertigen, C₂-C₁₀Alkoholen, wie Ethylenglykol, Propandiol-1,2, Butandiol, Hexandiol, Polyethylenglykol mit 2 bis 20, vorzugsweise 2 bis 8 Oxyethyleneinheiten, Neopentylglykol, Bisphenol A, Glycerin, Trimethylolpropan, Pentaerythrit, Sorbit und ungesättigte Polyester aus aliphatischen Di- und Polyolen sowie Maleinsäure, Fumarsäure und/oder Itaconsäure.

Die Vernetzung der Styrol/Butadien-Kautschuke zu SBR-Kautschukgelen kann auch in Latexform durch Nachvemetzung mit vernetzend wirkenden Chemikalien erfolgen. Geeignete vernetzend wirkende Chemikalien sind beispielsweise organische Peroxide, z.B. Dicumylperoxid, t-Butylcumylperoxid, Bis-(t-butyl-peroxy-isopropyl)benzol, Di-t-butylperoxid, Dibenzoylperoxid, Bis-(2,4-dichlorbenzoyl)peroxid, t-Butylperbenzoat, sowie organische Azoverbindungen, wie Azo-bis-isobutyronitril und Azo-bis-cyclohexannitril, sowie Di- und Polymercaptoverbindungen, wie Dimercaptoethan, 1,6-Dimercaptohexan, 1,3,5-Trimercaptotriazin, und Mercapto-terminierte Polysulfidkautschuke, wie Mercapto-terminierte Umsetzungsprodukte von Bischlorethylformal mit Natriumpolysulfid. Die optimale Temperatur zur Durchführung der Nachvernetzung ist naturgemäß von der Reaktivität des Vernetzers abhängig und kann bei Temperaturen von Raumtemperatur bis ca. 170°C gegebenenfalls unter erhöhtem Druck durchgeführt werden. Siehe hierzu Houben-Weyl, Methoden der organischen Chemie, 4. Auflage, Bd. 14/2, Seite 848. Besonders bevorzugte Vernetzungsmittel sind Peroxide.

Vor, während oder nach der Nachvernetzung in Latexform kann gegebenenfalls auch eine Teilchenvergrößerung durch Agglomeration durchgeführt werden.

Auch Styrol/Butadien-Kautschuke, die in organischen Lösungsmitteln hergestellt wurden, können als Ausgangsprodukte zur Herstellung der Styrol/Butadien-Kautschukgele dienen. In diesem Fall empfiehlt es sich, die Lösung des Kautschuks gegebenenfalls unter Zuhilfenahme eines Emulgators in Wasser zu emulgieren und die so erhaltene Emulsion vor oder nach der Entfernung des organischen Lösungsmittels mit geeigneten Vernetzern nachträglich zu vernetzen. Als Vernetzer eignen sich die zuvor genannten Vernetzer.

Bevorzugte Kautschuke (B) enthalten Doppelbindungen entsprechend Iodzahlen von mindestens 2, vorzugsweise 5 bis 470. Die Bestimmung der Iodzahlen erfolgt im allgemeinen durch Addition von Iodchlorid in Essigsäure nach Wijs, DIN 53 241, Teil 1. Die Iodzahl definiert die Iodmenge in Gramm, die von 100 g Substanz chemisch gebunden wird.

Die Kautschuke (B) besitzen in der Regel Mooney-Viskositäten ML 1+4/100°C (DIN 53 523) von 10 bis 150, vorzugsweise 20 bis 120.

Bevorzugte Kautschuke (B) sind neben Naturkautschuk auch Synthesekautschuke. Bevorzugte Synthesekautschuke sind beispielsweise bei I. Franta, Elastomers and Rubber Compounding Materials, Elsevier, New York 1989 oder auch in Ullmanns's Encyclopedia of Industrial, Vol. A23, VCH Verlagsgesellschaft, Weinheim 1993, beschrieben. Sie umfassen u.a.
- BR -: Polybutadien
- ABR -: Butadien/Acrylsäure-C₁₋₄-alkylester-Copolymere
- IR -: Polyisopren
- SBR -: Styrol/Butadien-Copolymerisate mit Styrolgehalten von 1 bis 60, vorzugsweise 2 bis 50 Gew.-%
- XSBR -: Styrol/Butadien-Copolymeriste und Pfropfpolymerisate mit Acrylsäure, Methacrylsäure, Acrylnitril, Hydroxyethylacrylat und/oder Hydroxyethylmethacrylat mit Styrolgehalten von 2 bis 50 Gew.-% und Gehalten an einpolymerisierten polaren Monomeren von 1 bis 30 Gew.-%
- IIR -: Isobutylen/Isopren-Copolymerisate
- NBR -: Butadien/Acrylnitril-Copolymere mit Acrylnitrilgehalten von 5 bis 60, vorzugsweise 10 bis 50 Gew.-%
- HNBR -: teilhydrierter NBR-Kautschuk, in dem bis zu 98,5 % der Doppelbindungen hydriert sind
- EPDM -: Ethylen/Propylen/Dien-Copolymerisate
sowie Mischungen dieser Kautschuke.

Für die Herstellung z.B. von Kfz-Reifen sind insbesondere Naturkautschuk, Emulsions-SBR-, Lösungs-SBR-Kautschuk mit einer Glastemperatur oberhalb von - 50°C, der gegebenenfalls mit Silylethern oder anderen funktionellen Gruppen modifiziert sein kann, wie z.B. in der EP-A 447 066 beschrieben, Polybutadienkautschuk mit hohem cis-1,4-Gehalt (> 90 %), der mit Katalysatoren auf Basis Ni, Co, Ti oder Nd hergestellt wird, sowie Polybutadienkautschuk mit einem Vinylgehalt von 0 bis 75 % und deren Mischungen von Interesse.

Die erfindungsgemäßen Kautschukmischungen aus dem Styrol/Butadien-Kautschukgel (A) und den doppelbindungshaltigen Kautschuken (B) können zusätzlich weitere Füllstoffe enthalten.

Besonders geeignete Füllstoffe zur Herstellung der erfindungsgemäßen Kautschukmischungen und Vulkanisate sind
- Ruße. Die hierbei zu verwendenden Ruße sind nach dem Flammruß-, Fumaceoder Gasruß-Verfahren hergestellt und besitzen BET-Oberflächen von 20 bis 200 m²/g, wie z.B. SAF-, ISAF-, IISAF-, HAF-, FEF- oder GPF-Ruße.
- hochdisperse Kieselsäuren, hergestellt z.B. durch Fällung von Lösungen von Silikaten oder Flammenhydrolyse von Siliciumhalogeniden mit spezifischen Oberflächen von 5 bis 1000, vorzugsweise 20 bis 400 m²/g (BET-Oberfläche) und mit Primärteilchengrößen von 5 bis 400 nm. Die Kieselsäuren können gegebenenfalls auch als Mischoxide mit anderen Metalloxiden, wie Al-, Mg-, Ca-, Ba-, Zn- und Tioxiden, vorliegen.
- Synthetische Silikate, wie Aluminiumsilikat, Erdalkalisilikate wie Magnesiumsilikat oder Calciumsilikat, mit BET-Oberflächen von 20 bis 400 m²/g und Primärteilchendurchmessern von 10 bis 400 nm.
- Natürliche Silikate, wie Kaolin und andere natürlich vorkommende Kieselsäuren.
- Metalloxide, wie Zinkoxid, Calciumoxid, Magnesiumoxid, Aluminiumoxid,
- Metallcarbonate, wie Magnesiumcarbonat, Calciumcarbonat, Zinkcarbonat.
- Metallsulfate, wie Calciumsulfat, Bariumsulfat.
- Metallhydroxide, wie Aluminiumhydroxid und Magnesiumhydroxid.
- Glasfasern und Glasfaserprodukte (Matten, Stränge) oder Mikroglaskugeln.
- Kautschukgele auf Basis Polychloropren und/oder Polybutadien mit Teilchengrößen von 5 bis 1000nm.

Die genannten Füllstoffe können alleine oder im Gemisch eingesetzt werden. In einer besonders bevorzugten Ausführungsform des Verfahrens werden 10 bis 100 Gew.-Teile Styrol/Butadien-Kautschukgel (A), gegebenenfalls zusammen mit 0,1 bis 100 Gew.-Teilen Ruß und/oder 0,4 bis 100 Gew.-Teilen helle Füllstoffe, jeweils bezogen auf 100 Gew.-Teile Kautschuk (B), zur Herstellung der Mischungen eingesetzt.

Die erfindungsgemäßen Kautschukmischungen können weitere Kautschukhilfsmittel enthalten wie Vernetzer, Reaktionsbeschleuniger, Alterungsschutzmittel, WärmeStabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Füllstoffaktivatoren wie Triethanolamin, Polyethylenglykol, Hexantriol, Bis(triethoxysilylpropyl)-tetrasulfid etc., die der Gummiindustrie bekannt sind.

Die Kautschukhilfsmittel werden in üblichen Mengen, die sich u.a. nach dem Verwendungszweck richten, eingesetzt. Übliche Mengen sind z.B. Mengen von 0,1 bis 50 Gew.-%, bezogen auf Kautschuk (B).

Als übliche Vernetzer können Schwefel, Schwefelspender oder Peroxide eingesetzt werden. Die erfindungsgemäßen Kautschukmischungen können darüber hinaus Vulkanisationsbeschleuniger enthalten. Beispiele für geeignete Vulkanisationsbeschleuniger sind Mercaptobenzthiazole, -sulfenamide, Guanidine, Thiurame, Dithiocarbamate, Thioharnstoffe und Thiocarbonate. Die Vulkanisationsbeschleuniger und Schwefel oder Peroxide werden in Mengen von 0,1 bis 10 Gew.-%, bevorzugt 0,1 bis 5 Gew.-%, bezogen auf Kautschuk (B), eingesetzt.

Die Vulkanisation der erfindungsgemäßen Kautschukmischungen kann bei Temperaturen von 100 bis 200°C, bevorzugt 130 bis 180°C, gegebenenfalls unter Druck von 10 bis 200 bar erfolgen.

Die erfindungsgemäßen Kautschukmischungen aus Styrol/Butadien-Kautschukgel (A) und den C=C-doppelbindungsgehaltigen Kautschuken (B) können auf verschiedene Weise hergestellt werden: Zum einen ist selbstverständlich möglich, die festen Einzelkomponenten zu mischen. Dafür geeignete Aggregate sind beispielsweise Walzen, Innenmischer oder Mischextruder. Aber auch das Mischen durch Vereinigen der Latices der Styrol/Butadien-Kautschukgele mit den Latices der unvernetzten Kautschuke ist möglich. Die Isolierung der so hergestellten erfindungsgemäßen Mischungen kann, wie üblich, durch Eindampfen, Ausfällen oder Gefrierkoagulation (vgl. US-PS 2 187 146) erfolgen. Durch Einmischen von Füllstoffen in die Latexmischungen und anschließende Aufarbeitung können die erfindungsgemäßen Mischungen direkt als Kautschuk-/Füllstoff-Formulierungen erhalten werden.

Die weitere Abmischung der Kautschukmischungen aus dem Styrol/Butadien-Kautschukgel (A) und den doppelbindungshaltigen Kautschuken (B) mit zusätzlichen Füllstoffen, sowie gegebenenfalls Kautschukhilfsmitteln kann in üblichen Mischaggregaten, wie Walzen, Innenmischern und Mischextrudern, durchgeführt werden. Bevorzugte Mischtemperaturen liegen bei 50 bis 180°C.

Die erfindungsgemäßen Kautschukvulkanisate eignen sich zur Herstellung von Formkörpern, z.B. für die Herstellung von Kabelmänteln, Schläuchen, Treibriemen, Förderbändern, Walzenbelägen, Reifen, insbesondere Reifenlaufflächen, Schuhsohlen, Dichtungsringen und Dämpfungselementen.

### Beispiele

### Beispiel 1

### (a) Vernetzung des SBR-Kautschuks in Latexform

26.976 g eines SBR-Latex (Baystal BL 1357 von Bayer France, Port Jerome) mit einem Gehalt an einpolymerisiertem Styrol von 24 Gew.-%, einer Teilchengröße von 60 nm (DVN) und einem Feststoffgehalt von 37,1 Gew.-% wurden mit 6.708 g Wasser verdünnt und in einem Autoklaven bei 60°C mit 150 g Dicumylperoxid versetzt. Anschließend wurde unter Stickstoffatmosphäre 2 Stunden bei 60°C gerührt, dann auf 150°C aufgeheizt und 45 Minuten bei dieser Temperatur gerührt. Nach dem Abkühlen wurde durch ein Monodurtuch (Porenweite 0,2 mm) filtriert. Der Kautschuklatex hatte einen Feststoffgehalt von 30 Gew.-%, der Quellungsindex der Gelteilchen betrug 5, der Teilchendurchmesser: 60 nm.

### (b) Mischung des vernetzten SBR-Kautschuks mit unvernetztem Naturkautschuk

5 kg des so behandelten Kautschuklatex wurden anschließend in eine Mischung aus 5 kg Naturkautschuklatex mit einem Feststoffgehalt von 30 Gew.-%, 300 g einer 5 %igen wäßrigen Harzseifenlösung (Dresinate 731, Hersteller Hercules) und 150 g einer 10 %igen wäßrigen Dispersion des Alterungsschutzmittels Vulkanox 4020 (Hersteller Bayer AG) eingerührt.

Die erhaltene Latexmischung enthielt vernetzten Kautschuk und Naturkautschuk im Gewichtsverhältnis 1:1.

### (c) Koagulation der Kautschukmischung

Zur Fällung von 3 kg Kautschukmischung wurden 10,45 kg der im Verfahrensschritt (b) gewonnenen Latexmischung bei 65°C in eine Lösung von 225 g NaCl, 40,8 g Al₂(SO₄)₃ x 18 H₂O, 4,5 g Gelatine in 30 l Wasser eingerührt, wobei der pH-Wert durch Zugabe von 10 %iger H₂SO₄ bei 4 gehalten wurde. Das Produkt wurde gründlich mit Wasser gewaschen und 2 Tage bei 70°C im Vakuum getrocknet.

Man erhielt ein Masterbatch bestehend aus 50 Gew.-% vernetzten SBR-Kautschukteilchen und 50 Gew.-% Naturkautschuk.

### Beispiel 2

14.721 g eines SBR-Latex (SHQ 6254) mit einem Gehalt an einpolymerisiertem Styrol von 40 Gew.-% und einer Teilchengröße von 115 nm (DVN) und einem Feststoffgehalt von 40,8 Gew.-% wurden mit 5.370 g Wasser verdünnt und in einem Autoklaven bei 60°C mit 39 g Dicumylperoxid versetzt. Der Autoklav wurde verschlossen und mit 5 bar Stickstoff beaufschlagt und entspannt. Die Prozedur wurde 3 mal wiederholt. Anschließend wurde 2 Stunden bei 60°C gerührt, dann auf 150°C aufgeheizt und 45 Minuten bei dieser Temperatur gerührt. Nach dem Abkühlen wurde durch ein Monodurtuch (Porenweite 0,2 mm) filtriert. Der vernetzte Kautschuklatex hatte einen Feststoffgehalt von 30 Gew.-%, der Quellungsindex betrug 7, der Teilchendurchmesser 115 nm (DVN).

Anschließend wurden 5 kg des so vernetzten Kautschuklatex mit 5 kg Naturkautschuklatex mit 30 % Feststoffgehalt gemäß dem Verfahren aus Beispiel 1 b/c gemischt und koaguliert. Man erhielt ein Masterbatch bestehend aus 50 Gew.-% vernetzten SBR-Kautschukteilchen und 50 Gew.-% Naturkautschuk.

### Beispiel 3

14.721 g eines SBR-Latex (SHQ 6254) mit einem Gehalt an einpolymerisiertem Styrol von 40 Gew.-% und einer Teilchengröße von 115 nm (DVN) und einem Feststoffgehalt von 40,8 Gew.-% wurden mit 5409 g Wasser verdünnt und in einem Autoklaven bei 60°C mit 60 g Dicumylperoxid versetzt. Der Autoklav wurde verschlossen und mit 5 bar Stickstoff beaufschlagt und entspannt. Die Prozedur wurde 3 mal wiederholt. Anschließend wurde 2 Stunden bei 60°C gerührt, dann auf 150°C aufgeheizt und 45 Minuten bei dieser Temperatur gerührt. Nach dem Abkühlen wurde durch ein Monodurtuch (Porenweite 0,2 mm) filtriert. Der vernetzte Kautschuklatex hatte einen Feststoffgehalt von 30 Gew.-%, der Quellungsindex betrug 5, der Teilchendurchmesser: 115 nm (DVN).

Anschließend wurden 5 kg des so vernetzten Kautschuklatex mit 5 kg Naturkautschuklatex mit 30 % Feststoffgehalt gemäß dem Verfahren aus Beispiel 1 b/c gemischt und koaguliert. Man erhielt ein Masterbatch bestehend aus 50 Gew.-% vernetzten SBR-Kautschukteilchen und 50 Gew.-% Naturkautschuk.

### Beispiel 4

14.721 g eines SBR-Latex (SHQ 6254) mit einem Gehalt an einpolymerisiertem Styrol von 40 Gew.-% und einer Teilchengröße von 115 nm (DVN) und einem Feststoffgehalt von 40,8 Gew.-% wurden mit 5.479 g Wasser verdünnt und in einem Autoklaven bei 60°C mit 90 g Dicumylperoxid versetzt. Der Autoklav wurde verschlossen und mit 5 bar Stickstoff beaufschlagt und entspannt. Die Prozedur wurde 3 mal wiederholt. Anschließend wurde 2 Stunden bei 60°C gerührt, dann auf 150°C aufgeheizt und 45 Minuten bei dieser Temperatur gerührt. Nach dem Abkühlen wurde durch ein Monodurtuch (Porenweite 0,2 mm) filtriert. Der vernetzte Kautschuklatex hatte einen Feststoffgehalt von 30 Gew.-%, der Quellungsindex betrug 4, der Teilchendurchmesser: 115 nm (DVN).

Anschließend wurden 5 kg des so vernetzten Kautschuklatex mit 5 kg Naturkautschuklatex mit 30 % Feststoffgehalt gemäß dem Verfahren aus Beispiel 1 b/c gemischt und koaguliert. Man erhielt ein Masterbatch bestehend aus 50 Gew.-% vernetzten SBR-Kautschukteilchen und 50 Gew.-% Naturkautschuk.

### Vergleichsbeispiel 1

### (a) Vernetzung des BR-Kautschuks in Latexform

12.368 g eines BR-Latex (SHQ 6022) mit einer Teilchengröße von 140 nm (DVN) und einem Feststoffgehalt von 42,5 Gew.-% wurden mit 5.315 g Wasser verdünnt und in einem Autoklaven bei 60°C mit 78,75 g Dicumylperoxid versetzt. Der Autoklav wurde verschlossen und mit 5 bar Stickstoff beaufschlagt und entspannt. Die Prozedur wurde 3 mal wiederholt. Anschließend wurde 2 Stunden bei 60°C gerührt, dann auf 150°C aufgeheizt und 45 Minuten bei dieser Temperatur gerührt. Nach dem Abkühlen wurde durch ein Monodurtuch (Porenweite 0,2 mm) filtriert. Der vernetzte Kautschuklatex hatte einen Feststoffgehalt von 45 Gew.-%, der Quellungsindex betrug 3, der Teilchendurchmesser: 150 nm (DVN).

### (b) Mischung des vernetzten BR-Kautschuks mit unvernetztem Naturkautschuk

3,333 kg des so behandelten Kautschuklatex wurden anschließend in eine Mischung aus 5 kg Naturkautschuk mit einem Feststoffgehalt von 30 Gew.-%, 300 g einer 5 %igen wäßrigen Harzseifenlösung (Dresinate 731, Hersteller Hercules) und 150 g einer 10 %igen wäßrigen Dispersion des Alterungsschutzmittels Vulkanox 4020 (Hersteller Bayer AG) eingerührt.

Die erhaltene Latexmischung enthielt vernetzten Kautschuk und Naturkautschuk im Gewichtsverhältnis 1:1.

### (c) Koagulation des Latex

Zur Fällung von 3 kg Kautschukmischung wurden 8,78 kg der im Verfahrensschritt (b) gewonnenen Latexmischung bei 65°C in eine Lösung von 225 g NaCl, 40,8 g Al₂(SO₄)₃ x 18 H₂O, 4,5 g Gelatine in 30 l Wasser eingerührt, wobei der pH-Wert durch Zugabe von 10 %iger H₂SO₄ bei 4 gehalten wurde. Das Produkt wurde gründlich mit Wasser gewaschen und 2 Tage bei 70°C im Vakuum getrocknet.

Man erhielt ein Masterbatch bestehend aus 50 Gew.-% vemetzten SBR-Kautschukteilchen und 50 Gew.% Naturkautschuk.

### Vergleichsbeispiel 2

Mischung eines schwefelvernetzten SBR-Kautschukgels (22 Gew.-% Styrolgehalt, Quellungsindex 33) in Naturkautschuk im Gewichtsverhältnis 1:1, hergestellt nach dem Verfahren des Beispiels 1 der GB-PS 1 078 400.

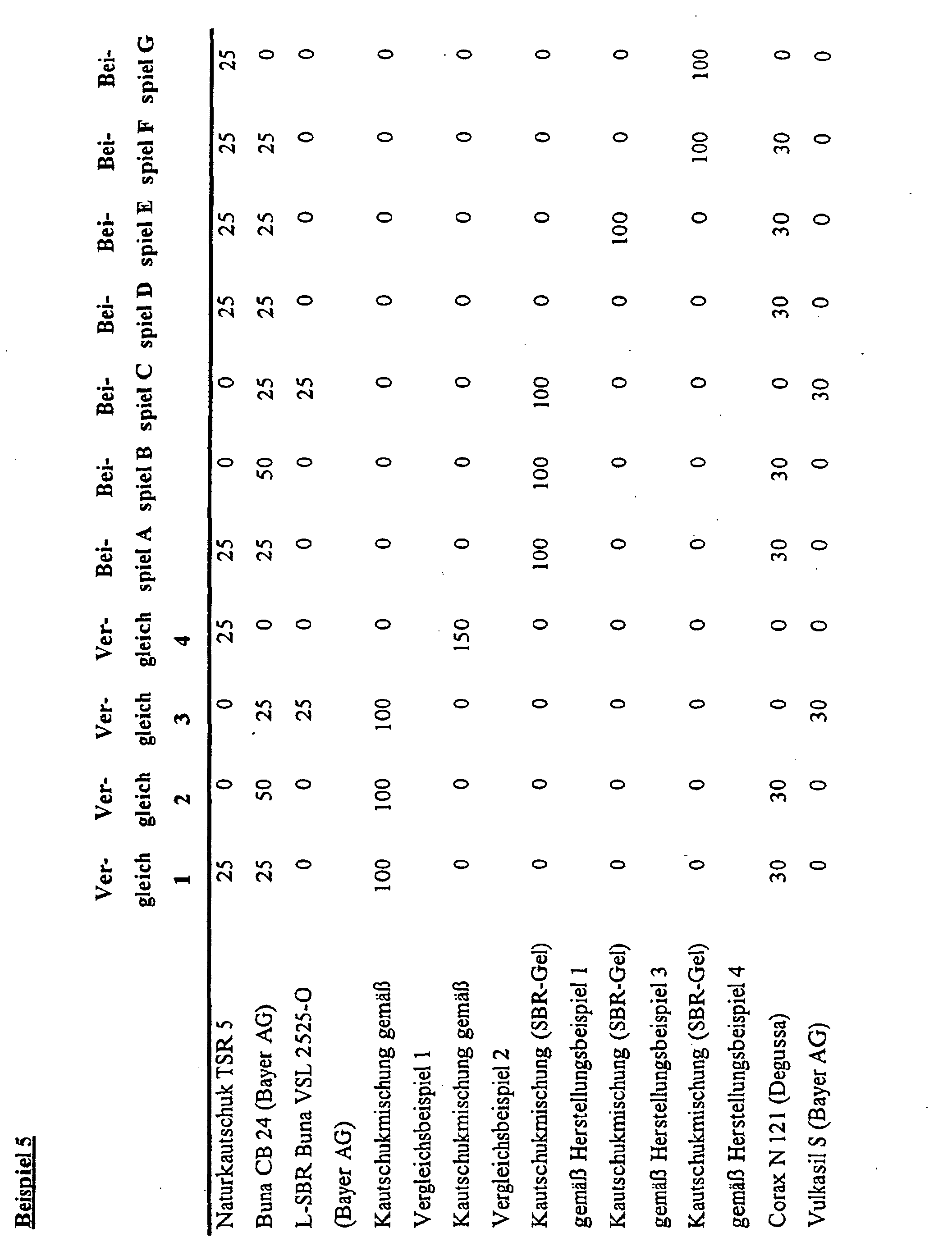

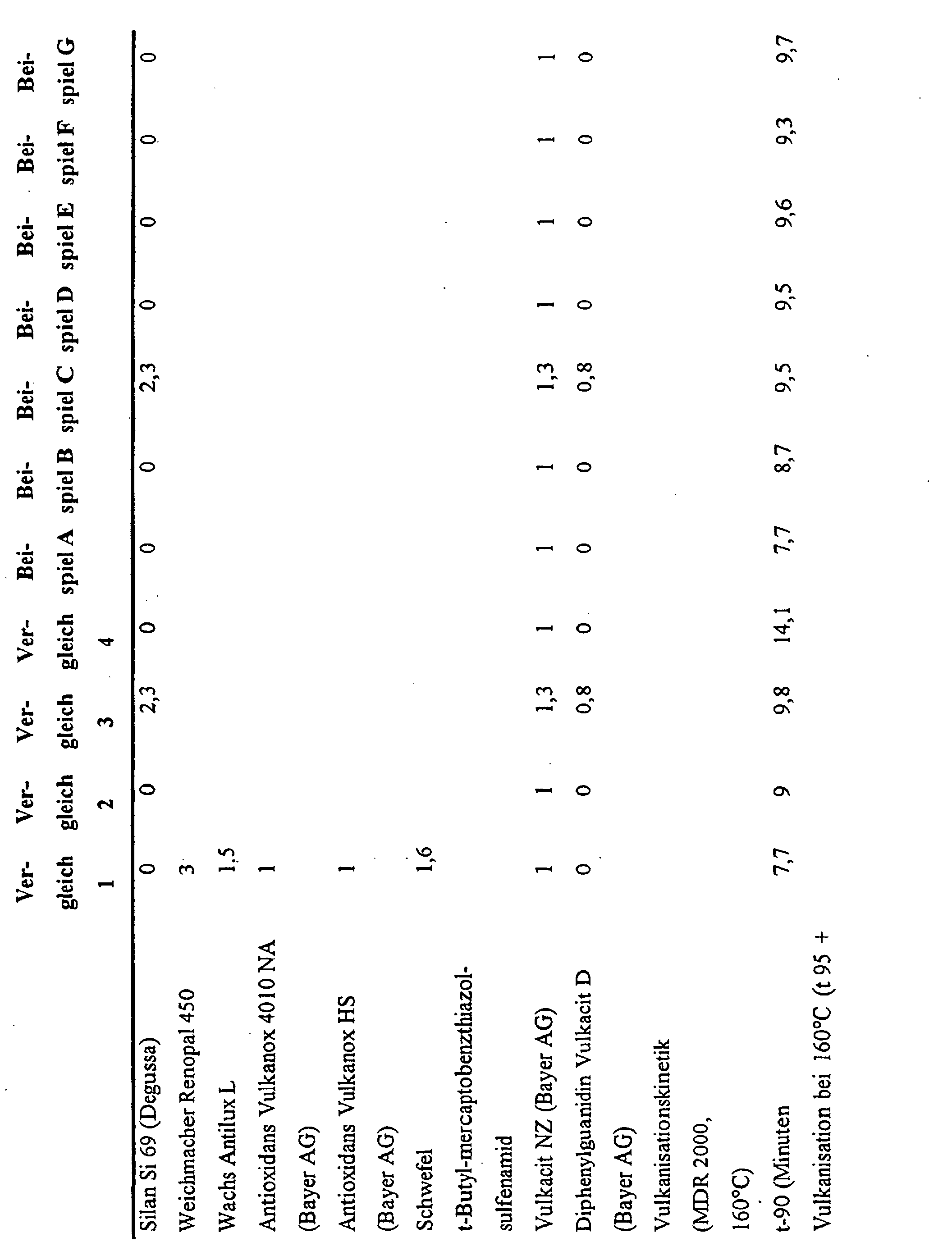

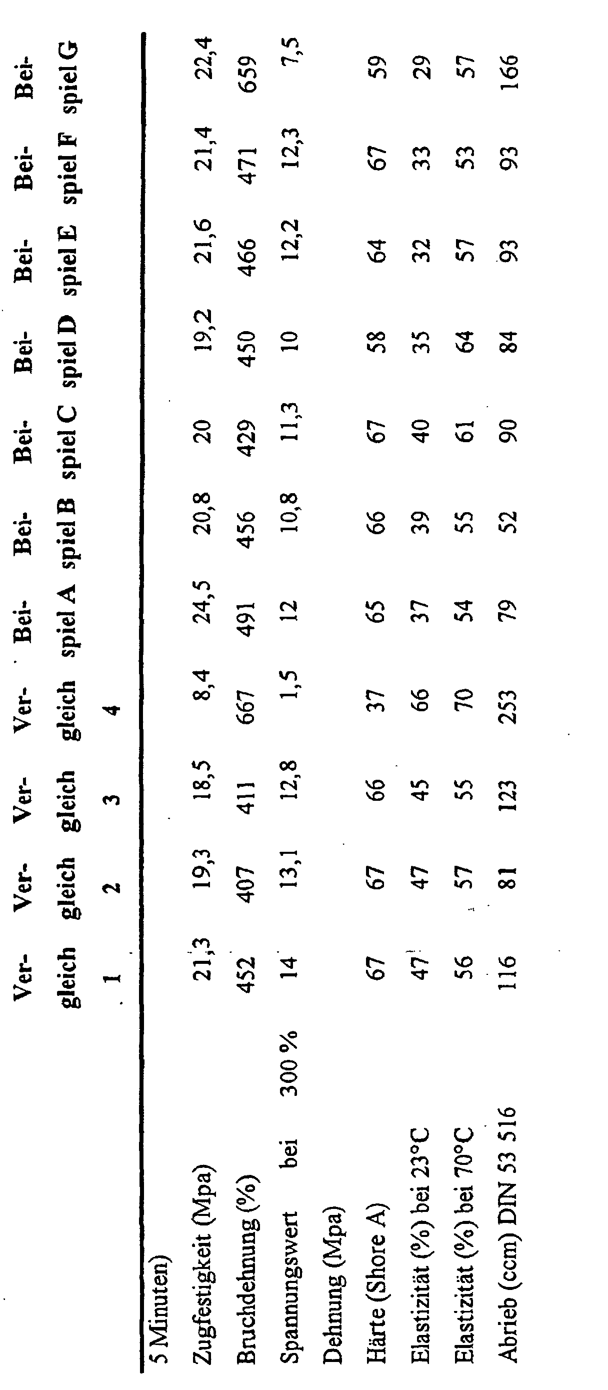

Anhand der Untersuchungen wird deutlich, daß die erfindungsgemäßen Styrol/Butadien-Kautschukgele deutlich niedrigere Rückprallelastizitätswerte bei 23°C liefern, die erfahrungsgemäß mit einer höheren Naßrutschfestigkeit der Reifen korrelieren, während sich die Rückprallelastizitäten bei 70°C auf dem Niveau der Vergleichsmischung befinden, wodurch sich ein Rollwiderstand in der gleichen Größenordnung ergibt. Durch die Verwendung von Polybutadienkautschuk in der Kautschukmischung wird überraschenderweise das Abriebverhalten deutlich verbessert ohne das Naßrutschverhalten (abgeleitet aus den Rückprallelastizitäten bei 23°C) wesentlich zu beeinflussen. Ein schwefelvernetztes Kautschukgel gemäß GB-PS 1 078 400 zeigt keinerlei verstärkende Eigenschaften und ist daher für die Anwendung ungeeignet.

## Patentansprüche

1. Kautschukmischungen aus mindestens einem Styrol/Butadien-Kautschukgel (A) und mindestens einem doppelbindungshaltigen Kautschuk (B), wobei der Anteil an Styrol/Butadien-Kautschukgel 1 bis 100 Gew.-Teile, bezogen auf 100 Gew.-Teile C=C-doppelbindungshaltigem Kautschuk beträgt, das Styrol/Butadien-Kautschukgel (A) einen Quellungsindex in Toluol von 1 bis 15 besitzt und eine Teilchengröße von 5 bis 1000 nm aufweist, sowie gegebenenfalls weitere Füllstoffe und Kautschukhilfsmittel.

2. Kautschukmischungen nach Anspruch 1, **dadurch gekennzeichnet, daß** der Anteil an Styrol/Butadien-Kautschukgel (A) 5 bis 75 Gew.-Teile, bezogen auf 100 Gew.-Teile C=C-doppelbindungshaltigem Kautschuk beträgt.

3. Verwendung der Kautschukmischung nach Anspruch 1 zur Herstellung von Kautschukvulkanisaten.

4. Verwendung der Kautschukmischung nach Anspruch 1 zur Herstellung von Formkörpern, insbesondere Reifenlaufflächen.

## Claims

1. Rubber mixtures prepared from at least one styrene/butadiene rubber gel (A) and at least one rubber which contains double bonds (B), wherein the styrene/butadiene rubber gel content is from 1 to 100 parts by weight, referred to 100 parts by weight of rubber which contains C=C double bonds, the styrene/butadiene rubber gel (A) has a swelling index in toluene of from 1 to 15 and a particle size of from 5 to 1000 nm, and optionally further fillers and rubber auxiliary substances.

2. Rubber mixtures according to Claim 1, **characterised in that** the content of styrene/butadiene rubber gel (A) is from 5 to 75 parts by weight, referred to 100 parts by weight of rubber which contains C=C double bonds.

3. Use of the rubber mixture according to Claim 1 for the preparation of rubber vulcanisates.

4. Use of the rubber mixture according to Claim 1 for the manufacture of mouldings, in particular tyre treads.

## Revendications

1. Mélanges de caoutchouc d'au moins un gel de caoutchouc styrène / butadiène (A) et d'au moins un caoutchouc contenant une double liaison (B), la quantité de gel de caoutchouc styrène / butadiène étant de 1 à 100 parties en poids, rapporté à 100 parties en poids de caoutchouc contenant une double liaison C=C, le gel de caoutchouc styrène / butadiène (A) présentant un indice de gonflement dans le toluène de 1 à 15 et une grosseur particulaire de 5 à 1000 nm, ainsi qu'éventuellement des charges et des adjuvants pour caoutchouc.

2. Mélanges de caoutchouc selon la revendication 1, **caractérisés en ce que** la quantité de gel de caoutchouc styrène / butadiène (A) est 5 à 75 parties en poids, rapporté à 100 parties en poids de caoutchouc contenant une double liaison C=C.

3. Utilisation du mélange de caoutchouc selon la revendication 1 pour la préparation de vulcanisats de caoutchouc.

4. Utilisation du mélange de caoutchouc selon la revendication 1 pour la préparation de corps moulés, en particulier des surfaces de roulement de pneumatiques.
